# FASCICULE DE BREVET EUROPEEN

(11) **EP 1 884 848 B1**
(45) Date de publication et mention de la délivrance du brevet: **02.09.2009**
(21) Numéro de dépôt: 07350008.4
(22) Date de dépôt: 11.07.2007
(51) Int. Cl.: G05B 19/042, G08C 17/00, E06B 1/00

(54) **Procédé de modification de données d'un système de commande autonome pour volet roulant**
Verfahren zur Datenänderung eines unabhängigen Kontrollsystems für einen Rollladen
Method for modification of data in a standalone control system for a roller blind

(30) Priorité: 26.07.2006 FR 0606839
(43) Date de publication de la demande: 06.02.2008
(73) Titulaire: Jouvence, 62081 Lestrem (FR)
(72) Inventeur: Stempnianoski, Tony, 62840 Laventie (FR)
(74) Mandataire: Tournel, Jean Louis

(56) Documents cités:
- WO-A2-03/083803
- FR-A- 2 856 500
- FR-A1- 2 785 430
- US-B1- 6 397 288

## Description

L'invention se rapporte à un procédé de modification de données d'un système de commande en vue de déplacer un tablier de volet à une heure prédéterminée.

L'invention se rapporte plus particulièrement à des systèmes autonomes de commande.

Les utilisateurs de volets roulants à moteur électrique souhaitent de plus en plus souvent pouvoir programmer le déplacement du tablier à l'heure voulue pour ne plus avoir à intervenir sur la commande chaque matin et soir. La télécommande ne sert qu'à manipuler le volet en dehors des mouvements programmés.

Pour ce faire, on connaît des télécommandes permettant de mémoriser une action sur le volet soit pour commander la montée soit pour commander la descente à l'horaire souhaité en agissant sur deux touches (la touche relative au sens de déplacement du volet et une touche supplémentaire pour indiquer à la télécommande que l'on souhaite mémoriser l'instruction) mais la mémorisation de cette action doit s'enregistrer à l'heure où cette action est souhaitée. Plus précisément si vous souhaitez programmer l'ouverture du volet à trois heures du matin, la mémorisation de ce mouvement doit être exécutée exactement à trois heures du matin. Cela est bien évidemment un inconvénient. Lorsque ce mouvement est programmé, cette action va se répéter tous les jours de la semaine sans varier. Il n'est pas possible par exemple, de lever les volets plus tardivement le week-end au moyen de la programmation.

On connaît également une autre famille de télécommande permettant à tout moment de programmer un mouvement du volet à toutes heures de la journée différentes de l'heure de la programmation. Pour cela, la télécommande possède un écran de visualisation, un clavier, de la mémoire pour y loger un programme pour cette programmation et des moyens pour exécuter ce programme. C'est alors la télécommande qui pilote les déplacements programmés. La télécommande doit toujours être en état de fonctionner.

Le coût d'une telle télécommande est beaucoup plus élevé que celui de la première famille et son encombrement est bien entendu plus important.

Sa consommation d'énergie est un handicap notamment en mode programmation, car il faut notamment alimenter l'écran et faire travailler le microprocesseur.

On connaît un système de commande de volets roulants gérés par un ordinateur FR2785430. Pour permettre de commander les volets quand l'ordinateur est éteint, il est prévu une télécommande.

Celle ci peut être reliée à l'ordinateur par une liaison de type USB.

Quand l'ordinateur est allumé et la télécommande connectée sur cet ordinateur, cette télécommande est assujettie et les ordres de monté ou descente transitent par la télécommande. Lorsque l'ordinateur est éteint la télécommande est devenue un émetteur d'ordre qui pilote totalement le volet. Cette télécommande loge donc l'électronique de commande et toutes les instructions programmées. Pour que l'ordinateur puisse piloter le volet roulant, il intègre un programme qui va agir sur la télécommande et qui va servir d'émetteur de commande. Lorsque cette télécommande est en panne ou hors de portée du volet roulant, le tablier de ce dernier ne peut plus se déplacer. La chute d'une télécommande est souvent à l'origine de ce type de pannes assez répétitives.

Il est également connu FR 2.856.500 de gérer le tablier d'un volet roulant en fonction des conditions de température au voisinage proche d'un ordinateur.

Pour cela, on relie un ordinateur à une télécommande par une liaison type USB afin, d'une part, d'introduire dans la télécommande des programmes qui vont gérer des volets roulants et, d'autre part, d'utiliser la télécommande comme capteurs de paramètres de confort, ces paramètres pouvant être la température et /ou la luminosité. Du fait de la liaison filaire qui est relativement courte la commande du déplacement du volet est donc liée à des paramètres de confort proche du lieu d'utilisation de l'ordinateur. La télécommande est toujours reliée à l'ordinateur. Si la télécommande tombe en panne, le volet est immobilisé. La télécommande se comporte comme un disque additionnel dans lequel sont stockés des programmes de confort.

Comme précédemment, la liaison USB sert à alimenter en énergie la télécommande qui est consommatrice car elle fait fonctionner le programme de confort et sollicite à chaque fois qu'elle déplace le tablier du volet une quantité d'énergie non négligeable notamment lié à l'émission d'un signal hertzien.

Le problème technique est donc différent des solutions évoquées précédemment.

Il consiste à ajouter à l'ordinateur de travail un capteur.

Contrairement aux systèmes autonomes, c'est la télécommande qui pilote l'ensemble d'où la nécessité de la brancher sur l'ordinateur au moyen d'une liaison USB.

L'objet de l'invention vise des volets roulants qui, programmés pour se déplacer, fonctionnent à des heures prédéterminées même si la télécommande est en panne. Elle vise également des systèmes faisant usage de télécommande à fonctionnalités réduites à savoir l'émission d'un ordre de déplacement par appui sur un bouton.

L'invention se propose donc d'apporter une solution a un système de commande autonome prévu pour fonctionner sans ordinateur et avec une télécommande simplifiée.

A cet effet l'invention a pour objet un procédé de modification de paramètres de fonctionnement d'un système de commande d'un volet roulant motorisé autonome non relié à un ordinateur, comprenant une télécommande et une carte de commande logée à proximité du moteur, cette carte de commande intégrant, dans une mémoire, un programme d'exploitation de paramètres enregistrés pour le déplacement programmé d'un volet, ce procédé étant caractérisé en ce que pour modifier les paramètres de fonctionnement du volet, on constitue sur un ordinateur indépendant du fonctionnement dudit volet les nouveaux paramètres à instruire dans le système de commande au moyen d'un programme de préparation desdits paramètres utilisant les ressources dudit ordinateur indépendant, on introduit les paramètres dans la télécommande via une liaison provisoire et on transfère ces paramètres de la télécommande au programme d'exploitation implanté à proximité immédiate du volet.

L'invention sera bien comprise à l'aide de la description ci après faite à titre d'exemple non limitatif en regard du dessin qui représente :

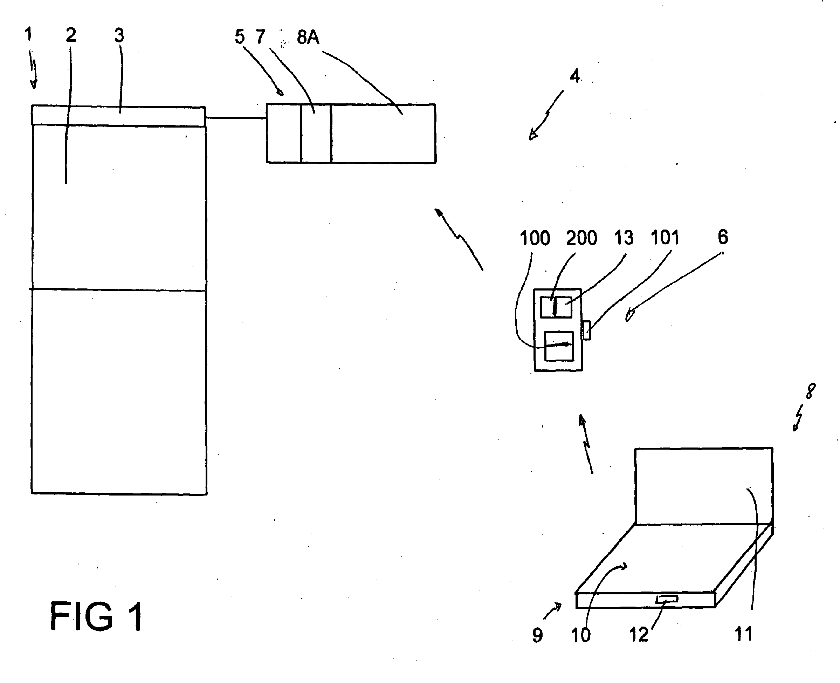

FIG 1 un volet roulant et les moyens de commande.
FIG 2 un synoptique de fonctionnement du procédé

En se reportant au dessin on voit un volet 1 roulant comprenant un tablier 2 enroulé sur un axe motorisé. Le moteur 3 de ce volet roulant est commandé par un système 4 de commande automatisé permettant de manoeuvrer le tablier à des heures programmées.

Ce volet est autonome et il n'est pas relié à distance à une station de télésurveillance ou à un ordinateur qui pilote ces mouvements.

Une carte 5 de commande comprend un programme qui gère en fonction de l'heure le sens de déplacement du tablier. Le déplacement du tablier est donc programmé et automatique.

Une télécommande sert à déplacer le volet en dehors des heures programmées.

Ce système de commande comprend donc une électronique 5 de commande implantée sur une carte logée à proximité ou dans le volet roulant et alimentée par le secteur. Une autre partie du système est implantée dans une télécommande 6 comprenant au moins un bouton 100 de commande montée/descente que l'on actionne manuellement.

Lorsque cette télécommande est sans fil, des moyens de communication permettent d'établir le contact entre l'électronique de commande du moteur et la télécommande par exemple, on utilise des moyens hertziens ou infra-rouge.

La fonctionnalité de la télécommande se limite à un ordre de déplacement du tablier par action sur un bouton. Elle comprend en outre des moyens de communications avec l'électronique de commande du moteur du volet roulant.

La carte 5 électronique qui pilote le moteur comporte donc une horloge, une mémoire dans laquelle sont logées des instructions (données) qui servent aux déplacements programmés du tablier et d'autres moyens tels des moyens en vue de mesurer les paramètres du moteur afin de le stopper.

L'électronique de commande comprend donc des moyens 7 de mémorisation d'instructions de montée/descente à des instants programmés et des moyens d'exécutions de ces instructions programmées ainsi que des ordres donnés par la télécommande suite à l'action sur un bouton.

Des moyens 8A d'exécution d'une instruction mémorisée sont donc prévus. Ces instructions mémorisées le sont dans une mémoire logée à proximité du moteur ou dans le tube logeant ledit moteur. Ces instructions ne sont pas mémorisées dans la télécommande.

Les paramètres à introduire sont la date, l'heure, le sens de déplacement du volet, accessoirement la course du tablier.

Pour modifier les paramètres du type précité, on fait appel à un procédé de modification de paramètres de fonctionnement d'un système de commande d'un volet roulant motorisé autonome non relié à un ordinateur, comprenant une télécommande 6 et une carte 5 de commande logée à proximité du moteur, cette carte 5 intégrant, dans une mémoire, un programme 8A d'exploitation de paramètres pour le déplacement programmé d'un volet.

Selon l'invention, pour modifier les paramètres de fonctionnement du volet, on crée les nouveaux paramètres à instruire au moyen d'un programme 12 de préparation desdits paramètres utilisant les ressources d'un ordinateur 9 indépendant du fonctionnement dudit volet, on introduit les paramètres dans la télécommande 6 et on transfère ces paramètres de la télécommande à la mémoire 7 du programme 8A d'exploitation implanté à proximité immédiate du volet.

Un programme informatique implantable ou téléchargeable ou accessible par un réseau de communication type internet permet de créer, sur l'ordinateur utilisé, de nouveaux paramètres qui seront utilisés pour le fonctionnement du volet roulant.

Les moyens 8 de programmation que sont un clavier 10 de saisie, un écran 11 de visualisation sont constitués par ceux d'un ordinateur 9 classique distinct de la télécommande 6 précitée, cet ordinateur faisant fonctionner un programme 12 permettant d'une part, de constituer dans l'ordinateur des instructions interprétables par le système de commande du volet roulant et d'autre part, de les transférer dans le système de commande, lequel système de commande comporte des moyens 13 en vue d'établir une liaison communicante provisoire avec l'ordinateur classique et de procéder à la réception des instructions.

Les instructions créées par l'ordinateur sont de simples données et ne s'assimilent pas à un programme. Ce sont des valeurs écrites dans un langage interprétable par le programme d'exploitation implanté à l'origine sur la carte de commande du moteur.

On aura compris que l'intérêt de cette solution est d'utiliser l'ordinateur familial ou éventuellement celui de son voisin ou du bureau pour constituer une interface comprenant déjà les moyens de saisie et de visualisation de cette saisie des instructions de commande du volet roulant. Ceci évite donc de constituer une télécommande coûteuse. Si on ne dispose pas d'un ordinateur chez soi, vous pouvez apporter votre télécommande à votre bureau et après avoir connecté la télécommande à l'ordinateur du bureau, exécuter le programme de préparation des données pour les introduire dans la télécommande. Lorsque vous rentrez chez vous, il suffit, par exemple d'envoyer un ordre à votre volet roulant, pour que les nouveaux paramètres introduits dans la télécommande soient transférés dans l'électronique de commande implantée sur le volet roulant. Votre volet roulant est alors re-paramétré.

Le programme de préparation des instructions consiste simplement à poser des questions du type : Heure, Sens, Distance ou à afficher des choix (Heure de montée ? Heure de descente ?). En fonction des réponses saisies par le clavier, le programme construit les instructions à introduire dans la carte de commande dans un langage appropriée au micro-controleur ou microprocesseur utilisé sur la carte électronique.

Selon la capacité de mémorisation de la carte électronique, la programmation du déplacement peut se faire pour chaque jour de la semaine à des heures différentes.

Les instructions sont alors transférées à la télécommande qui sert uniquement de relai.

Par ailleurs, il est plus simple de créer un programme utilisable sur un système d'exploitation (Windows, Mac, Linux) connu que de développer, sur la télécommande, un programme en langage machine qui devra en outre gérer un afficheur et un clavier implanté sur une télécommande sachant que la gestion d'un écran est consommateur d'énergie.

La liaison entre le système de commande et l'ordinateur peut se faire par câble en utilisant les connecteurs et normes usuels des micro-ordinateurs par exemple les connecteurs connus sous l'appellation USB ou alors cette liaison peut être sans fil, par exemple, celle connue sous le nom WIFI ou Bluetooth.

En effet, beaucoup de particuliers disposent d'un ordinateur familial. Un programme 12 implanté sur un support physique ou téléchargeable pourra être implanté sur cet ordinateur ou même implanté sur un serveur mis à disposition par le fabricant du volet. Ce programme permet de dialoguer avec l'utilisateur afin qu'il choisisse le jour et

l'heure et le sens du déplacement du volet. Ce programme constituera alors une interface homme/machine.Des moyens de communication sont implantés sur la télécommande et l'ordinateur pour la communication.

C'est d'autant plus intéressant sur une télécommande centrale destinée à piloter plusieurs volets.

En effet, on utilise un seul moyen de communication pour plusieurs volets.

Chaque volet pourra être programmé indépendamment des autres.

Les instructions seront transférées via la télécommande à la carte électronique qui pilote le moteur, proche dudit moteur, par une action du type j'appuie sur un bouton particulier 101 et j'envoie une instruction de montée ou de descente au volet correspondant.

La mémoire 200 de la télécommande sera juste une mémoire dite de transit permettant de stocker provisoirement les instructions élaborées.

Par ordinateur, on comprendra l'ordinateur fixe ou portable ou encore les ordinateurs de poche (« PALM ») ou autre.

Bien évidemment lorsqu'on a affaire à une télécommande dite générale qui comporte éventuellement autant de boutons de manoeuvre que de volets, les instructions pour un volet particulier seront adressées uniquement à ce volet grâce à un moyen d'identification.

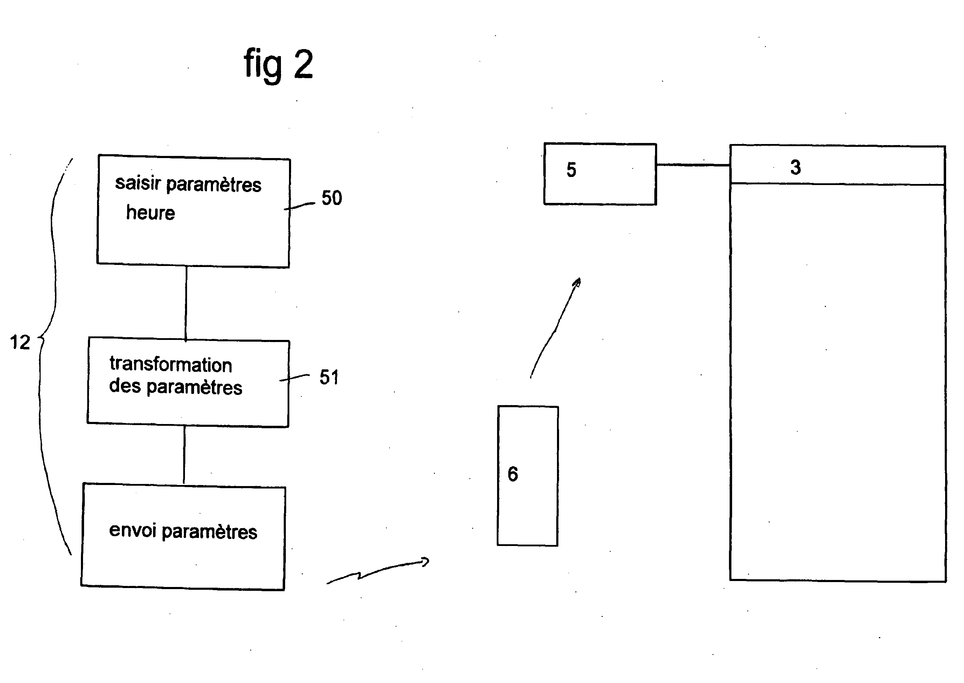

La figure 2 montre les différentes étapes du procédé.

L'étape 1 consiste à saisir les données dans une fenêtre 50 qui propose l'heure, le sens de déplacement etc.

Un programme 51 transforme ces données entrées sur un clavier en un langage interprétable par l'électronique du volet roulant.

Lorsque ces données sont transformées, elles sont envoyées sur la télécommande 6 qui va les adresser ensuite à l'électronique 5 du volet roulant.

On peut donc aisément modifier les heurs de déplacement du volet sans avoir recours à une télécommande sophistiquée consommatrice d'énergie. Par rapport à une télécommande de base envoyant un signal de déplacement, il faut juste prévoir éventuellement un peu de mémoire supplémentaire pour stocker provisoirement les données à transférer et gérer ce transfert.

## Revendications

1. Procédé de modification de paramètres de fonctionnement d'un système de commande d'un volet (1) roulant motorisé autonome non relié à un ordinateur, comprenant, d'une part, une télécommande (6) et, d'autre part, une carte (5) de commande logée à proximité du moteur, cette carte (5) de commande intégrant, dans une mémoire, un programme (8A) d'exploitation de paramètres enregistrés pour le déplacement programmé d'un volet, ce procédé étant **caractérisé en ce que** pour modifier les paramètres de fonctionnement du volet, on constitue sur un ordinateur (9) indépendant du fonctionnement dudit volet, les nouveaux paramètres à instruire, au moyen d'un programme (12) de préparation desdits paramètres utilisant les ressources dudit ordinateur indépendant, on introduit les paramètres dans la télécommande via une liaison provisoire et on transfère ces paramètres de la télécommande à la mémoire (7) du programme (8A) d'exploitation implanté à proximité immédiate du volet.

2. Procédé de modification de paramètres de fonctionnement d'un système de commande d'un volet roulant selon la revendication 1 **caractérisé en ce qu'**on télécharge le programme (12) de préparation via une liaison type internet.

3. Procédé de modification de paramètres de fonctionnement d'un système de commande d'un volet roulant selon la revendication 1 **caractérisé en ce qu'**on implante le programme (12) de préparation sur un support physique.

4. Procédé de modification de paramètres de fonctionnement d'un système de commande d'un volet roulant selon l'une quelconque des revendications précédentes **caractérisé en ce qu'**on utilise un ordinateur indépendant du fonctionnement du volet roulant.

## Claims

1. Method of changing operating parameters of a control system for an autonomous, motor-driven rolling shutter (1) not connected to a computer, comprising a remote control (6) on the one hand and a control card (5) placed in the vicinity of the motor on the other hand, this control card (5) integrates, in a memory, a programme (8A) for operating parameters recorded with a view to the programmed displacement of a shutter, this method being **characterised in that,** in order to change the operating parameters of the shutter, the new instruction parameters are set up on a computer (9) which is independent of the operation of said shutter by means of a programme (12) for preparing said parameters using the resources of said independent computer, the parameters are introduced into the remote control via a temporary link and these parameters are transferred from the remote control to the memory (7) of the operating programme (8A) implanted in the immediate vicinity of the shutter.

2. Method of changing operating parameters of a control system of a rolling shutter as claimed in claim 1, **characterised in that** the preparation programme (12) is loaded remotely via an internet-type link.

3. Method of changing operating parameters of a control system of a rolling shutter as claimed in claim 1, **characterised in that** the preparation programme (12) is implanted on a physical support.

4. Method of changing operating parameters of a control system of a rolling shutter as claimed in any one of the preceding claims, **characterised in that** a computer is used which is independent of the operation of the rolling shutter.

## Patentansprüche

1. Verfahren zur Änderung der Funktionsparameter eines motorgetriebenen autonomen Systems zur Steuerung eines schwenkbaren Ladens (1), welches nicht mit einem Rechner verbunden ist, umfassend einerseits eine Fernbedienung (6) und andererseits eine Steuerkarte (5), die in der Nähe des Motors untergebracht ist, wobei diese Steuerkarte (5) in einem Speicher ein Programm (8A) zur Nutzung registrierter Parameter für eine programmierte Bewegung eines Ladens aufnimmt,
**dadurch gekennzeichnet, dass** man zur Änderung der Funktionsparameter des Ladens auf einem Rechner (9), welcher von der Funktion dieses Ladens unabhängig ist, die neuen vorzugebenden Parameter erstellt, mittels eines Programms (12) zur Vorbereitung dieser Parameter unter Verwendung der Ressourcen dieses unabhängigen Rechners, man diese Parameter über eine provisorische Verbindung in die Fernbedienung einbringt und man diese Parameter von der Fernbedienung zu dem Speicher (7) des Programms (8A) zur Nutzung überträgt, welches in unmittelbarer Nähe zu dem Laden untergebracht ist.

2. Verfahren zur Änderung der Funktionsparameter eines Systems zur Steuerung eines schwenkbaren Ladens nach Anspruch 1, **dadurch gekennzeichnet, dass** man das Programm (12) zur Vorbereitung über eine Internetverbindung herunterlädt.

3. Verfahren zur Änderung der Funktionsparameter eines Systems zur Steuerung eines schwenkbaren Ladens nach Anspruch 1, **dadurch gekennzeichnet, dass** man das Programm (12) zur Vorbereitung auf einem physischen Träger unterbringt.

4. Verfahren zur Änderung der Funktionsparameter eines Systems zur Steuerung eines schwenkbaren Ladens nach einem der vorhergehenden Ansprüche, **dadurch gekennzeichnet, dass** man einen von der Funktion des schwenkbaren Ladens unabhängigen Rechner verwendet.
